# FASCICULE DE BREVET EUROPEEN

(11) **EP 3 632 782 B1**
(45) Date de publication et mention de la délivrance du brevet: **04.08.2021**
(21) Numéro de dépôt: 19197326.2
(22) Date de dépôt: 13.09.2019
(51) Int. Cl.: B62D 43/04, B60K 13/04

(54) **PARTIE ARRIÈRE DE VÉHICULE DOTÉE D'UN RESERVOIR D'URÉE**
HINTERER FAHRZEUGTEIL, DER MIT EINEM HARNSTOFFTANK AUSGESTATTET IST
REAR END OF A VEHICLE PROVIDED WITH A UREA TANK

(30) Priorité: 02.10.2018 FR 1859137
(43) Date de publication de la demande: 08.04.2020
(73) Titulaire: RENAULT s.a.s., 92100 Boulogne-Billancourt (FR)
(72) Inventeur: JARRY, Frederic, 92350 LE PLESSIS ROBINSON (FR); KLEIN, Pascal, 60180 NOGENT SUR OISE (FR)

(56) Documents cités:
- EP-A1- 3 173 273
- EP-A1- 3 173 274
- JP-A- 2007 022 249
- JP-A- 2008 265 689
- JP-A- 2016 107 827

## Description

L'invention se rapporte à une partie arrière de véhicule, dotée d'un réservoir d'urée.

Certains véhicules sont équipés d'un réservoir d'urée pour assurer la dépollution des gaz d'échappement. Il est souhaitable que ce réservoir soit placé à l'arrière du véhicule, pour être à proximité du pot d'échappement et ainsi avoir une influence efficace sur les gaz d'échappement.

Or, bien souvent, la partie arrière de ces véhicules est encombrée, notamment par la présence d'une roue de secours placée sous le plancher du coffre, rendant difficile voire impossible l'implantation d'un réservoir d'urée au niveau dudit plancher.

Le JP 2008 265689 A par exemple, divulgue une partie arrière de véhicule comprenant un coffre comportant un soubassement et une roue de secours apte à être montée sous ledit soubassement. De plus, le document décrit un réservoir d'urée monté sur la face inférieur du soubassement, entre le soubassement et la roue de secours.

Une partie arrière de véhicule selon l'invention est configurée pour permettre une insertion aisée d'un réservoir d'urée, malgré la présence d'une roue de secours.

L'invention a pour objet une partie arrière de véhicule comprenant un coffre comportant un soubassement et une roue de secours apte à être montée sous ledit soubassement.

Selon l'invention, la partie arrière de véhicule comprend une butée fixée au soubassement et insérée entre ledit soubassement et la roue de secours, ladite butée ménageant avec le soubassement un espace libre destiné à recevoir au moins un réservoir d'urée et étant apte à maintenir la roue de secours à distance dudit soubassement. Autrement dit, le principe de l'invention repose sur la présence d'une butée ayant la double fonction de créer un espace libre avec le soubassement, et de maintenir une distance entre la roue de secours et le soubassement, de façon à ce que ladite roue de secours ne vienne pas empiéter sur l'espace libre. Cette butée permet donc de créer un espace dans lequel sera logé au moins un réservoir d'urée prévu pour assurer la dépollution des gaz d'échappement. De cette manière, suivant un axe vertical et du haut vers le bas, nous trouvons un empilement de pièces comprenant le soubassement, le réservoir d'urée, la butée et la roue de secours. Avantageusement, une partie arrière de véhicule selon l'invention est une partie arrière d'un véhicule Diesel. Préférentiellement, la butée est une pièce rigide indéformable.

Selon une caractéristique possible de l'invention, la butée possède une ouverture et est fixée au soubassement au niveau d'une paroi délimitant ladite ouverture. L'ouverture permet d'alléger la butée et d'avoir accès aux différentes pièces présentes autour de ladite butée, telles que par exemple la roue de secours. Cette ouverture limite également l'encombrement de la butée. La paroi délimitant l'ouverture peut par exemple être constituée par un cadre.

Selon une caractéristique possible de l'invention, l'ouverture est en position centrale dans la butée.

Selon une caractéristique possible de l'invention, la butée est constituée par un cadre possédant quatre côtés. De cette manière, la butée est dimensionnée au plus juste pour maintenir une distance entre la roue de secours du soubassement, tout en demeurant légère et peu encombrante.

Selon une caractéristique possible de l'invention, le cadre est un cadre mécano-soudé comprenant des pièces tubulaires et des plaques renfort. Il s'agit d'un exemple illustratif et non pas limitatif d'une butée particulièrement adaptée au contexte de l'invention.

Selon une caractéristique possible de l'invention, la butée est vissée au soubassement. Il s'agit d'un moyen de fixation sûr, fiable et bien maitrisé, surtout si la butée revêt la forme d'un cadre métallique.

Selon une caractéristique possible de l'invention, la partie arrière de véhicule comprend un panier dans lequel vient se loger la roue de secours, ledit panier étant positionné sous la roue de secours et étant fixé au soubassement en supportant ladite roue de secours. Le panier joue le rôle d'une pièce support de la roue de secours sous le véhicule. La roue est d'abord placée dans le panier, puis l'ensemble constitué par ladite roue et ledit panier est mis en rotation vers le haut jusqu'à venir en appui contre la butée. Le panier supportant la roue est alors arrimé au soubassement, par exemple par vissage. Dans l'empilement des différentes pièces précitées, le panier constitue la pièce la plus basse.

Selon une caractéristique possible de l'invention, le soubassement comprend deux longerons, le panier supportant la roue de secours étant fixé à au moins l'un desdits longerons. Les longerons sont des pièces allongées et parallèles, qui s'étendent selon un axe longitudinal X du véhicule.

Selon une caractéristique possible de l'invention, l'espace libre loge un plancher et un réservoir d'urée placés entre le soubassement et la butée. L'espace est ainsi dimensionné pour accueillir à la fois le réservoir d'urée et le plancher. Préférentiellement, le réservoir est d'abord arrimé au plancher, et l'ensemble constitué par ces deux éléments est ensuite placé dans l'espace libre puis fixé au soubassement.

Selon une caractéristique possible de l'invention, le réservoir d'urée à une capacité d'au moins 10 litres. Il s'agit donc d'un réservoir plutôt volumineux, et il est donc important de pouvoir placer judicieusement la butée, de façon à dégager un espace libre suffisamment grand pour loger le réservoir et éventuellement l'ensemble constitué par ledit réservoir et un plancher.

Une partie arrière de véhicule selon l'invention présente l'avantage de pouvoir loger un réservoir d'urée, grâce à la mise en œuvre judicieuse d'une butée simple et facile à fabriquer. Il en découle qu'il n'est pas nécessaire de modifier en profondeur les éléments déjà présents dans cette partie arrière de véhicule, pour loger ledit réservoir. Par conséquent, le stockage de ce réservoir d'urée s'effectue en préservant la géométrie, les dimensions et la fonction de tous les éléments placés dans l'environnement immédiat de ce réservoir.

On donne, ci-après, une description détaillée d'un mode de réalisation préféré d'une partie arrière de véhicule selon l'invention, en se référant aux figures suivantes :
- La figure 1 est une vue en perspective du dessus d'une partie arrière de véhicule selon l'invention, montrant un plancher et un soubassement d'un coffre arrière,
- La figure 2 est une vue en perspective du dessus d'une partie arrière de véhicule selon l'invention, montrant une butée et une roue de secours, le plancher ayant été retiré,
- La figure 3 est une vue en perspective éclaté d'une partie arrière de véhicule selon l'invention,
- La figure 4 est une vue en perspective et en coupe d'une partie arrière de véhicule selon l'invention,

La description détaillée qui va suivre s'effectue à partir d'un repère XYZ classiquement utilisé en conception automobile, dans lequel X est la direction avant arrière dirigé vers l'arrière, Y est la direction transversale dirigée vers la droite et Z est la direction verticale dirigé vers le haut.

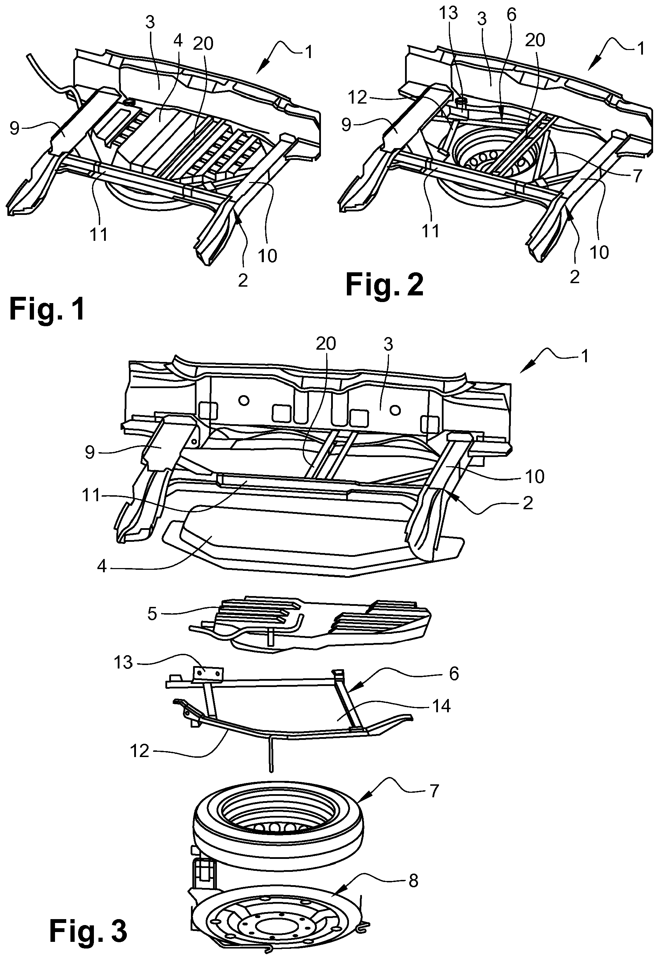

En se référant à la figure 3, une partie arrière 1 de véhicule selon l'invention comprend un coffre arrière délimité par un soubassement 2 et une paroi arrière 3 s'étendant selon une direction transversale Y du véhicule, ladite paroi 3 arrière constituant la partie la plus en arrière du véhicule. Cette partie arrière 1 comprend en outre un plancher 4, un réservoir d'urée 5, une butée 6, une roue de secours 7 et un panier 8 de réception de ladite roue de secours 7.

En se référant aux figures 1, 2 et 3, le soubassement 2 comprend deux longerons 9, 10 latéraux et parallèles, reliés entre eux par une barre 11 s'étendant selon une direction transversale Y du véhicule, ladite barre 11 étant parallèle à la paroi arrière 3 du coffre et placée devant ladite paroi 3. Chaque longeron 9, 10 est constitué par une pièce allongée s'étendant selon un axe longitudinal X du véhicule sur les deux côtés du véhicule. Le soubassement 2 comprend également une barre centrale 20, parallèle aux deux longerons 9, 10 et située au milieu desdits longerons 9, 10.

Le panier 8 de la roue de secours 7 est constitué par une paroi métallique ajourée, de forme sensiblement circulaire. Ce panier 8 est assimilable à un plateau ayant des dimensions légèrement supérieures à celles de de la roue de secours 7, ledit plateau se positionnant sous la roue de secours 7 afin de maintenir ladite roue de secours 7 sous le véhicule. Le panier 8 est fixé au soubassement 2 en emprisonnant la roue de secours 7 sous le véhicule.

En se référant aux figures 2 et 3, la butée 6 se présente sous la forme d'un cadre mécano-soudé, comprenant des segments tubulaires 12 et des plaques 13 de renfort. Ce cadre 6 comprend schématiquement quatre segments tubulaires 12 définissant un contour sensiblement rectangulaire et délimitant une ouverture centrale 14. Cette butée 6 est fixée à au moins l'un des éléments constituant le soubassement 2, à savoir un longeron 9, 10 ou la barre 11 reliant lesdits longerons 9, 10 ou la barre centrale 20 placée entre lesdits longerons 9, 10. Cette butée 6 est donc fixée au soubassement 2 en ménageant avec ledit soubassement 2, un espace libre.

Lorsque la roue de secours 7 est montée sous le véhicule, elle est d'abord placée dans le panier 8, puis l'ensemble constitué par ledit panier 8 et ladite roue de secours 7, qui était initialement dans une position inclinée par rapport à une direction horizontale sous le véhicule, est pivoté vers le haut jusqu'à arriver en appui contre la butée 6. Cette butée 6 a donc pour objet de stopper le déplacement vers le haut de l'ensemble constitué par la roue de secours 7 et le panier 8, afin de préserver l'espace libre supérieur situé entre ladite butée 6 et le soubassement 2. Une fois que le panier 8 et la roue de secours 7 sont en appui contre la butée 6, le panier 8 est alors fixé au soubassement 2 par vissage.

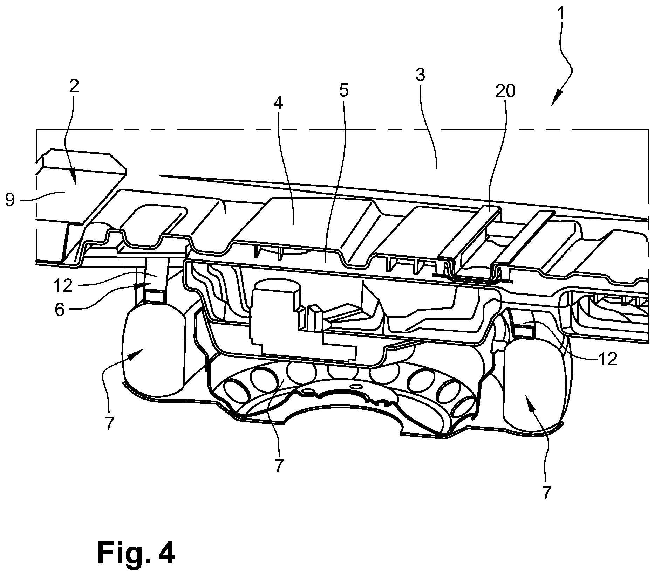

En se référant aux figures 1, 3 et 4 un assemblage comprenant le plancher 4 et le réservoir d'urée 5 est inséré dans l'espace libre ménagé entre la butée 6 et le soubassement 2. Avantageusement, le réservoir d'urée 5 est d'abord solidarisé au plancher 4 par tout moyen, pouvant par exemple être un collage, un vissage et/ou des clips. L'assemblage ainsi obtenu est inséré dans l'espace compris entre la butée 6 préalablement fixée au soubassement 2 et ledit soubassement 2. Le plancher 4 est préférentiellement réalisé en plastique chargé en fibre de verre. C'est une pièce de faible épaisseur, typiquement inférieure à 10cm, dont le contour est adapté à la géométrie de l'espace libre destiné à recevoir ledit plancher 5 et ledit réservoir d'urée 5. De même le réservoir d'urée 5 est une pièce de faible épaisseur, typiquement inférieure à 10cm, dont le contour est adapté à la géométrie et aux dimensions du plancher 4.

En résumant, le coffre arrière d'une partie arrière 1 de véhicule selon l'invention comprend un empilement de pièces suivant un axe vertical Z. Cet empilement comprend du bas vers le haut, le panier 8, la roue de secours 7, la butée 6, l'ensemble constitué par le plancher 4 et le réservoir d'urée 5 ledit réservoir 5 étant préférentiellement placé sous ledit plancher 4, et le soubassement 2.

La butée 6 empêche la roue de secours 7 de se rapprocher du soubassement 2, de façon à maintenir un espace libre entre ladite roue de secours 7 et ledit soubassement 2, ledit espace étant destiné à loger un plancher 4 et un réservoir d'urée 5.

Le réservoir d'urée 5 est utilisé pour dépolluer les gaz d'échappement, et une partie arrière 1 de véhicule selon l'invention est avantageusement constituée par une partie arrière d'un véhicule Diesel.

## Revendications

1. Partie arrière (1) de véhicule comprenant un coffre comportant un soubassement (2) et une roue de secours (7) apte à être montée sous ledit soubassement (2), **caractérisée en ce qu'**elle comprend une butée (6) fixée au soubassement (2) et insérée entre ledit soubassement (2) et la roue de secours (7), et **en ce que** ladite butée (6) ménage avec le soubassement (2) un espace libre destiné à recevoir au moins un réservoir d'urée (5), ladite butée (6) étant apte à maintenir la roue de secours (7) à distance dudit soubassement (2).

2. Partie arrière de véhicule selon la revendication 1, **caractérisée en ce que** la butée (6) possède une ouverture (14) et est fixée au soubassement (2) au niveau d'une paroi délimitant ladite ouverture (14).

3. Partie arrière de véhicule selon la revendication 2, **caractérisée en ce que** l'ouverture (14) est en position centrale dans la butée (6).

4. Partie arrière de véhicule selon l'une quelconque des revendications 2 ou 3, **caractérisée en ce que** la butée (6) est constituée par un cadre possédant quatre côtés (12).

5. Partie arrière de véhicule selon la revendication 4, **caractérisée en ce que** le cadre (6) est un cadre mécano-soudé comprenant des pièces tubulaires (12) et des plaques renfort (13).

6. Partie arrière de véhicule selon l'une quelconque des revendications 1 à 5, **caractérisée en ce que** la butée (6) est vissée au soubassement (2).

7. Partie arrière de véhicule selon l'une quelconque des revendications 1 à 5, **caractérisée en ce qu'**elle comprend un panier (8) dans lequel vient se loger la roue de secours (7), et **en ce que** le panier (8) est positionné sous la roue de secours (7) et est fixé au soubassement (2) en supportant ladite roue de secours (7).

8. Partie arrière de véhicule selon la revendication 7, **caractérisée en ce que** le soubassement (2) comprend deux longerons (9, 10), et **en ce que** le panier (8) supportant la roue de secours (7) est fixé à au moins l'un desdits longerons (9, 10).

9. Partie arrière de véhicule selon l'une quelconque des revendications 1 à 8, **caractérisée en ce que** l'espace libre loge un plancher (4) et un réservoir d'urée (5) placée entre le soubassement (2) et la butée (6).

10. Partie arrière de véhicule selon l'une quelconque des revendications 1 à 7, **caractérisée en ce que** le réservoir d'urée (6) à une capacité d'au moins 10 litres.

## Patentansprüche

1. Heckteil (1) eines Fahrzeugs, das einen Kofferraum enthält, der einen Unterboden (2) und ein Reserverad (7) aufweist, das unter den Unterboden (2) montiert werden kann, **dadurch gekennzeichnet, dass** es einen Anschlag (6) enthält, der am Unterboden (2) befestigt und zwischen den Unterboden (2) und das Reserverad (7) eingefügt ist, und dass der Anschlag (6) mit dem Unterboden (2) einen Freiraum ausspart, der dazu bestimmt ist, mindestens einen Harnstofftank (5) aufzunehmen, wobei der Anschlag (6) das Reserverad (7) in Abstand zum Unterboden (2) halten kann.

2. Heckteil eines Fahrzeugs nach Anspruch 1, **dadurch gekennzeichnet, dass** der Anschlag (6) eine Öffnungsfläche (14) besitzt und am Unterboden (2) im Bereich einer die Öffnungsfläche (14) begrenzenden Wand befestigt ist.

3. Heckteil eines Fahrzeugs nach Anspruch 2, **dadurch gekennzeichnet, dass** die Öffnungsfläche (14) in zentraler Stellung im Anschlag (6) ist.

4. Heckteil eines Fahrzeugs nach einem der Ansprüche 2 oder 3, **dadurch gekennzeichnet, dass** der Anschlag (6) aus einem vier Seiten (12) besitzenden Rahmen besteht.

5. Heckteil eines Fahrzeugs nach Anspruch 4, **dadurch gekennzeichnet, dass** der Rahmen (6) ein maschinengeschweißter Rahmen ist, der rohrförmige Bauteile (12) und Verstärkungsplatten (13) enthält.

6. Heckteil eines Fahrzeugs nach einem der Ansprüche 1 bis 5, **dadurch gekennzeichnet, dass** der Anschlag (6) an den Unterboden (2) geschraubt ist.

7. Heckteil eines Fahrzeugs nach einem der Ansprüche 1 bis 5, **dadurch gekennzeichnet, dass** es einen Korb (8) enthält, in dem das Reserverad (7) aufgenommen wird, und dass der Korb (8) unter dem Reserverad (7) positioniert und am Unterboden (2) befestigt ist, indem er das Reserverad (7) trägt.

8. Heckteil eines Fahrzeugs nach Anspruch 7, **dadurch gekennzeichnet, dass** der Unterboden (2) zwei Längsträger (9, 10) enthält, und dass der das Reserverad (7) tragende Korb (8) an mindestens einem der Längsträger (9, 10) befestigt ist.

9. Heckteil eines Fahrzeugs nach einem der Ansprüche 1 bis 8, **dadurch gekennzeichnet, dass** der Freiraum einen Boden (4) und einen Harnstofftank (5) aufnimmt, der zwischen dem Unterboden (2) und dem Anschlag (6) angeordnet ist.

10. Heckteil eines Fahrzeugs nach einem der Ansprüche 1 à 7, **dadurch gekennzeichnet, dass** der Harnstofftank (6) ein Fassungsvermögen von mindestens 10 Liter hat.

## Claims

1. Vehicle rear part (1) comprising a boot comprising an underbody (2) and an emergency spare wheel (7) able to be mounted under said underbody (2), **characterized in that** it comprises a stop piece (6) fixed to the underbody (2) and inserted between said underbody (2) and the emergency spare wheel (7), and **in that** said stop piece (6) creates, with the underbody (2), a free space intended to house at least a urea tank (5), said stop piece (6) being able to keep the emergency spare wheel (7) some distance away from said underbody (2).

2. Vehicle rear part according to Claim 1, **characterized in that** the stop piece (6) has an opening (14) and is fixed to the underbody (2) at a wall delimiting said opening (14).

3. Vehicle rear part according to Claim 2, **characterized in that** the opening (14) is in a central position in the stop piece (6).

4. Vehicle rear part according to either one of Claims 2 or 3, **characterized in that** the stop piece (6) consists of a frame having four sides (12).

5. Vehicle rear part according to Claim 4, **characterized in that** the frame (6) is an all-welded frame comprising tubular components (12) and strengthening plates (13).

6. Vehicle rear part according to any one of Claims 1 to 5, **characterized in that** the stop piece (6) is screw-fastened to the underbody (2).

7. Vehicle rear part according to any one of Claims 1 to 5, **characterized in that** it comprises a basket (8) in which the emergency spare wheel (7) is housed, and **in that** the basked (8) is positioned beneath the emergency spare wheel (7) and is fixed to the underbody (2), supporting said emergency spare wheel (7).

8. Vehicle rear part according to Claim 7, **characterized in that** the underbody (2) comprises two longitudinal side members (9, 10) and **in that** the basket (8) supporting the emergency spare wheel (7) is fixed to at least one of said longitudinal side members (9, 10).

9. Vehicle rear part according to any one of Claims 1 to 8, **characterized in that** the free space houses a floor (4) and a urea tank (5) positioned between the underbody (2) and the stop piece (6).

10. Vehicle rear part according to any one of Claims 1 to 7, **characterized in that** the urea tank (6) has a capacity of at least 10 litres.
